(19) Europäisches Patentamt
European Patent Office
Office européen des brevets

(11) **EP 2 325 609 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(51) Int Cl.:
***G01D 5/244*** *(2006.01)*

(21) Anmeldenummer: **10170753.7**

(22) Anmeldetag: **26.07.2010**

(54) **Abtasteinheit einer Positionsmesseinrichtung**

Sampling unit of a positioning device

Unité de balayage d'un dispositif de mesure de position

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **17.11.2009 DE 102009046773**

(43) Veröffentlichungstag der Anmeldung:
**25.05.2011 Patentblatt 2011/21**

(73) Patentinhaber: **Dr. Johannes Heidenhain GmbH 83301 Traunreut (DE)**

(72) Erfinder:
• **Lipp, Friedrich**
**5121 Ostermiething (AT)**
• **Schlichtner, Ludwig**
**5122 Hochburg-Ach (AT)**

(56) Entgegenhaltungen:
**EP-B1- 0 514 081     DE-A1- 4 413 697**
**DE-U1- 29 712 803     SU-A1- 930 608**

**Beschreibung**

Die Erfindung betrifft eine Abtasteinheit einer Positionsmesseinrichtung. Die Abtasteinheit umfasst eine Kontrollvorrichtung zur Kontrolle der Amplitude zumindest eines analogen Abtastsignals der Abtasteinheit und eine Anzeigeeinheit zur Signalisierung der Amplitudenhöhe.

Die Kontrolle der Abtastsignale ist insbesondere bei der Montage der Positionsmesseinrichtung erforderlich. Die Signalqualität und somit die Messgenauigkeit ist erheblich von der exakten Justierung der Abtasteinheit relativ zum Maßstab abhängig. Um bei inkrementalen Positionsmesseinrichtungen eine hohe Messgenauigkeit zu gewährleisten, sollen die von der Abtasteinheit erzeugten Abtastsignale eine hohe und gleiche Amplitude sowie einen gegenseitigen Phasenversatz von 90° aufweisen. Die Amplitude wird im Wesentlichen durch die Lage der Abtasteinheit zum Maßstab bestimmt, das heißt Abstand, Verdrehung und seitliche Verschiebung der Abtasteinheit senkrecht zur Messrichtung relativ zum Maßstab.

Gemäß der EP 0 514 081 B1 werden die Abtastsignale einer Kontrollvorrichtung zugeführt, welche die Amplitude mit einem Grenzwert vergleicht. Liegt die Amplitude unterhalb dieses Grenzwertes, wird eine Anzeige aktiviert, die als Hinweis dafür dient, dass die Abtasteinheit gegenüber dem Maßstab falsch angebaut ist.

Nachteilig dabei ist, dass die Anzeigeeinheit ausschließlich signalisiert, ob der Abtastkopf korrekt oder nicht korrekt angebaut ist, indem eine grüne oder eine rote Lichtquelle leuchtet.

Es wurde bereits erkannt, dass dieser Hinweis allein für den Anbau nicht ausreicht und es für den Anwender vorteilhaft wäre, auch einen Hinweis bezüglich der tatsächlichen Höhe der Amplitude zu erhalten. Hierzu wird nun in der DE 101 57 112 A1 vorgeschlagen, die Amplitude des Abtastsignals mit einem vorgegebenen Sollwert zu vergleichen und in Abhängigkeit der Abweichung die Leuchtstärke einer Lichtquelle als Anzeigeeinheit zu variieren.

Nachteilig dabei ist, dass die Zuordnung von Leuchtstärke zu Amplitudenhöhe für den Anwender schwierig ist.

Der Erfindung liegt daher die Aufgabe zugrunde, eine Abtasteinheit anzugeben, durch die ein Hinweis erzeugbar ist, der eine bessere Aussage über den Zustand der Amplitude zumindest eines positionsabhängigen Abtastsignals zulässt.

Diese Aufgabe wird durch eine Abtasteinheit mit den Merkmalen des Anspruches 1 gelöst.

Demnach weist die Abtasteinheit der Positionsmesseinrichtung eine Kontrollvorrichtung zur Kontrolle der Amplitude eines positionsabhängigen analogen Abtastsignals der Abtasteinheit und eine Anzeigeeinheit zur Signalisierung der Amplitude auf. Die Kontrollvorrichtung ist dazu ausgelegt, zumindest eine Lichtquelle der Anzeigeeinheit derart anzusteuern, um einen Wechsel des Leuchtzustandes der Lichtquelle zu bewirken, welche die Information über die momentane Amplitudenhöhe beinhaltet. Besonders vorteilhaft ist, wenn die Anzahl der aufeinanderfolgenden Wechsel ein Maß für die Amplitude des Abtastsignals ist.

Ein Maß für die Amplitude bedeutet dabei entweder direkt proportional zur Größe der momentanen Amplitude oder die Abweichung zwischen der momentanen Amplitude und der gewünschten Sollamplitude.

Bevorzugt ist die Kontrollvorrichtung dazu ausgelegt, die Lichtquelle in einem Bereich von 60% bis 100% der Sollamplitude in zumindest vier voneinander unterscheidbare Zustände zu versetzen, wobei diese Zustände sich in der Anzahl der Wechsel des Leuchtzustandes unterscheiden. Durch diese Maßnahme erhält der Bediener eine aussagefähig Information über die Tendenz der Amplitude, wobei sich die Anzahl der Wechsel des Leuchtzustandes über den Bereich 60% bis 100% der Sollamplitude für den Bediener sichtbar fast kontinuierlich ändert. Der somit generierte und sichtbare Hinweis ist eine Art digitale Anzeige, die das Maß der Amplitude darstellt.

Der Wechsel des Leuchtzustandes ist eine Unterbrechung des Leuchtens der Lichtquelle der Anzeigeeinheit, wobei die Anzahl der jeweils in gleichen Zeitabständen aufeinanderfolgenden Unterbrechungen ein Maß für die Amplitude des Abtastsignals ist. Bei dem besonders bevorzugten Ausführungsbeispiel sind die Zeitabstände der aufeinanderfolgenden Unterbrechungen, also die Frequenz, bei allen Amplituden gleich, so dass der Bediener bei allen Amplituden nur die Anzahl der aufeinanderfolgenden Unterbrechungen zählen muss und diese Anzahl eindeutig als Maß der Amplitude interpretieren kann. Eine Unterbrechung des Leuchtens der Lichtquelle entspricht einem Ausschalten der Lichtquelle.

In einer Ausgestaltung der Erfindung weist die Kontrollvorrichtung eine erste Steuereinrichtung auf, die dazu ausgelegt ist, die Lichtquelle der Anzeigeeinheit derart anzusteuern, um das Leuchten der Lichtquelle in Abhängigkeit der Amplitude zu unterbrechen, wobei die Anzahl der jeweils in gleichen Zeitabständen aufeinanderfolgenden Unterbrechungen ein Maß für die Amplitude des Abtastsignals ist. Zusätzlich weist die Kontrollvorrichtung eine zweite Steuereinrichtung auf, welche dazu ausgelegt ist, die Leuchtstärke dieser Lichtquelle oder einer anderen Lichtquelle der Anzeigeeinheit proportional zur Amplitude des Abtastsignals zu verändern. Vorzugsweise steuern beide Steuereinrichtungen eine gemeinsame Lichtquelle an, wobei einerseits die Leuchtstärke dieser Lichtquelle bei Erhöhung der Amplitude In Richtung der Sollamplitude ansteigt und gleichzeitig das Leuchten in vorgegebenen Zeitabständen kurz unterbrochen wird. Diese Unterbrechungen sind derart, dass sie vom Bediener gezählt werden können und die Zahl aufeinanderfolgender Unterbrechungen ein Maß für die Amplitude des Abtastsignals darstellt. Die Zeitdauer des Leuchtens zwischen zwei aufeinanderfolgenden Unterbrechungen ist größer als die Zeitdauer einer Unterbrechung selbst. Somit bleibt für den Bediener auch die Information der Leuchtstärke als Qualitätskriterium der Amplitude gut sichtbar.

In einer weiteren bevorzugten Ausgestaltung umfasst die Anzeigeeinheit zwei Lichtquellen, wobei jeweils beide Lichtquellen von der ersten Steuereinrichtung sowie von der zweiten Steuereinrichtung angesteuert sind, und die zweite Steuereinrichtung die Leuchtstärke beider Lichtquellen invers zueinander verändert. Dabei ist eine der beiden Lichtquellen grün leuchtend und die andere der beiden Lichtquellen rot leuchtend. Die Leuchtstärke der grün leuchtenden Lichtquelle wird bei steigender Amplitude in Richtung der Sollamplitude erhöht, wogegen die Leuchtstärke der rot leuchtenden Lichtquelle bei steigender Amplitude in Richtung der Sollamplitude verringert wird.

Eine Positionsmesseinrichtung mit einer erfindungsgemäß ausgestalteten Abtasteinheit ist im Anspruch 6 angegeben.

Einzelheiten sowie Vorteile der Erfindung ergeben sich aus der nachfolgenden Beschreibung eines Ausführungsbeispiels der Erfindung anhand der Figuren. Dabei zeigt:

Figur 1        eine Positionsmesseinrichtung mit einer Abtasteinheit und einer Anzeigeeinheit;

Figur 2        eine Kontrolleinheit und die Anzeigeeinheit der Abtasteinheit;

Figur 3        den Verlauf eines von der Amplitude abhängigen Ansteuersignals der Anzeigeeinheit;

Figur 4        eine tabellarische Darstellung der Ansteuerung der Anzeigeeinheit in Abhängigkeit von der Amplitude, und

Figur 5a, 5b, 5c        die zeitliche Ansteuerung der Anzeigeeinheit.

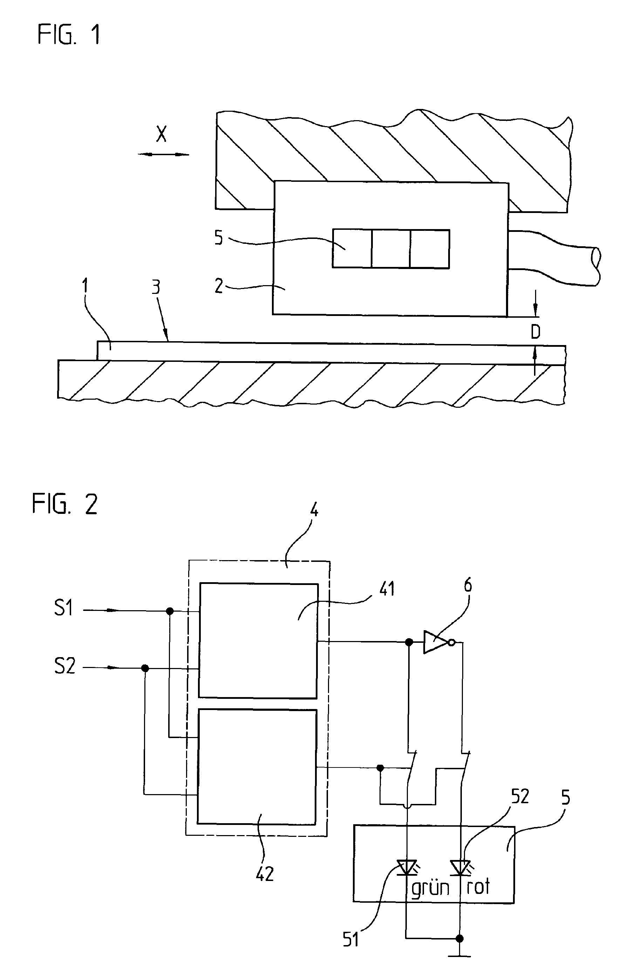

Die in Figur 1 dargestellte Positionsmesseinrichtung besteht aus einem Maßstab 1 sowie einer Abtasteinheit 2. Der Maßstab 1 ist beispielsweise ein Maßband, das an seiner Oberfläche eine Teilung 3, bestehend aus abwechselnd reflektierenden Bereichen und nicht reflektierenden Bereichen aufweist. Die Abtasteinheit 2 tastet die Teilung 3 des Maßstabes 1 in Messrichtung X ab und erzeugt dabei mehrere um 90° gegeneinander phasenverschobene periodische analoge Abtastsignale S1, S2, auch Quadratursignale genannt, wobei S1 = A×sin a einer Sinusfunktion und S2 = A×cos a einer Cosinusfunktion folgt. Die Amplitude A dieser Abtastsignale S1, S2 ist abhängig von der Lage der Abtasteinheit 2 relativ zum Maßstab 1, insbesondere vom Abtastabstand D. Zur Funktionsfähigkeit im Messbetrieb der Positionsmesseinrichtung ist es erforderlich, dass die Amplitude A ein bestimmtes Maß nicht unterschreitet. Es ist deshalb bei der Montage der Abtasteinheit 2 relativ zum Maßstab 1 besonders wichtig, die Lage zum Maßstab 1 derart einzustellen, dass die Amplitude A eine ausreichende Höhe zumindest nahe der gewünschten Sollamplitude (im Beispiel 1V) aufweist.

Es gibt nun mehrere an sich bekannte Möglichkeiten, aus mehreren um 90° gegeneinander phasenverschobenen Abtastsignalen S1, S2 ein amplitudenproportionales Signal, welches die Amplitude A repräsentiert, zu erzeugen.

Eine der einfachsten Möglichkeiten besteht darin, es rechnerisch durch $\sqrt{S1^2 + S2^2}$ zu bilden.

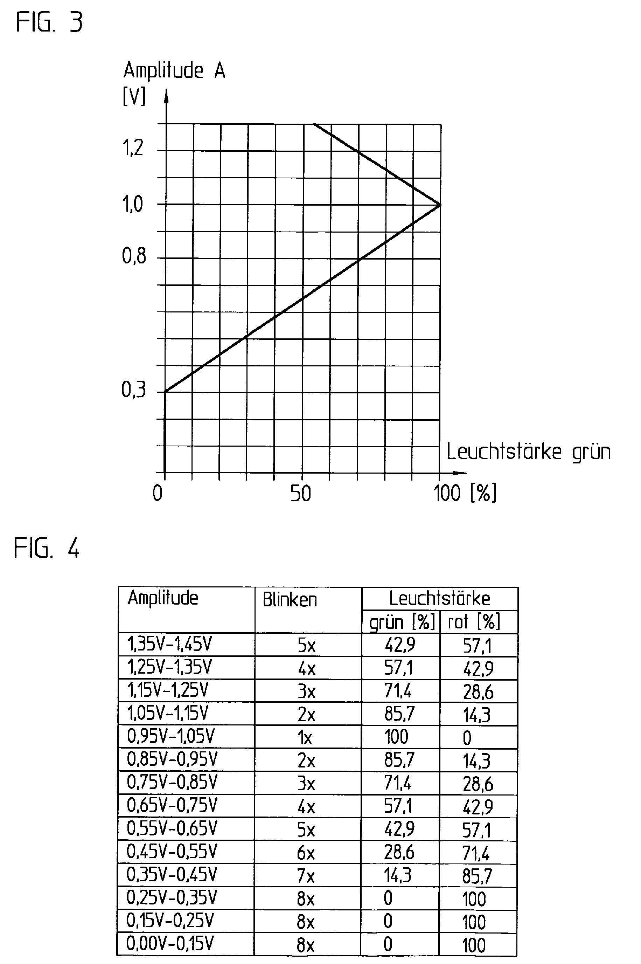

Die Figur 2 der DE 101 57 112 A1 zeigt eine alternative Möglichkeit auf. Verwendet wird ein Multiplexer, dem einerseits vier jeweils um 90° gegeneinander phasenverschobene Abtastsignale S1 = A×sin a, S2 = A×cos a, S3 = -A×sin a, S4 = -A×cos a zugeführt werden und dem andererseits über Steuereingänge Umschaltsignale zugeführt werden. Die Umschaltsignale werden von einer Komparatorschaltung mit zwei Komparatoren aus den Abtastsignalen S1 bis S4 erzeugt. Der Multiplexer selektiert dabei aus den Abtastsignalen S1 bis S4 jeweils das mit maximaler Amplitude und setzt diese selektierten Abtastsignale S1 bis S4 zu einer Hüllkurve zusammen, welches das Amplitudensignal darstellt. Das Amplitudensignal ist direkt proportional zur momentanen Amplitude A der Abtastsignale S1 bis S4. Die Signale hierzu sind in Figur 3 der DE 101 57 112 A1 dargestellt, auf die hier ausdrücklich Bezug genommen wird.

Das der Amplitude A proportionale Amplitudensignal ist auch durch bekannte Gleichrichterschaltungen, beispielsweise gemäß der DE 44 28 673 A1 erzeugbar.

Die Abtasteinheit 2 weist eine Kontrollvorrichtung 4 zur Kontrolle der Amplitude A der Abtastsignale S1, S2 auf. Die Kontrollvorrichtung 4 steuert eine Anzeigeeinheit 5 an, welche dem Bediener den momentanen Zustand der Amplitude A signalisiert.

Hierzu umfasst die Kontrollvorrichtung 4 eine Steuereinrichtung 41, welche dazu ausgelegt ist, die Leuchtstärke zweier Lichtquellen 51, 52 der Anzeigeeinheit 5 in Abhängigkeit der Amplitude A der Abtastsignale S1, S2 zu verändern. Die erste Lichtquelle 51 leuchtet grün und ändert ihre Leuchtstärke in Abhängigkeit der Amplitude, wie in Figur 3 dargestellt. In diesem Beispiel ist die Sollamplitude mit 1 V angenommen. Die Leuchtstärke der ersten Lichtquelle 51, also der grün leuchtenden Lichtquelle 51, ist in Figur 4 in Abhängigkeit der Amplitude A in % angegeben.

Die Steuereinrichtung 41 steuert zusätzlich die zweite Lichtquelle 52 an, die rot leuchtet und ihre Leuchtstärke ebenfalls in Abhängigkeit der Amplitude A der Abtastsignale S1, S2 verändert. In Figur 4 ist die Abhängigkeit der Leuchtstärke dieser rot leuchtenden Lichtquelle 52 dargestellt. Die Leuchtstärke der roten Lichtquelle 52 verändert sich gegensinnig zur Leuchtstärke der grünen Lichtquelle 51, was schaltungstechnisch durch einen Inverter 6 symbolisiert ist. Liegt die Amplitude A der Abtastsignale S1, S2 unter 0,3 V, leuchtet ausschließlich die rote Lichtquelle 52 mit maximaler Leuchtstärke, also 100%. Verändert sich die Amplitude A in Richtung der Sollamplitude von 1 V, verringert sich die Leuchtstärke der roten Lichtquelle 52 kontinuierlich, bis 0%. Die Leuchtstärke der grünen Lichtquelle 51 verändert sich invers dazu, nimmt also kontinuierlich bis zum Erreichen der Sollamplitude von 1 V stetig zu, bis sie 100% erreicht. Durch diese gegenläufige Veränderung der Leuchtstärke beider Lichtquellen 51, 52 wird eine kontinuierliche Farbmischung generiert, aus welcher der Bediener einen brauchbaren Hinweis über den aktuellen Zustand der momentanen Amplitude A erhält.

Bei der Montage der Abtasteinheit 2 ist es besonders wichtig, dass die Lage der Abtasteinheit 2 gegenüber dem Maßstab 1 derart eingestellt wird, dass die Amplitude zumindest nahe der Sollamplitude von 1 V zu liegen kommt. Um nun insbesondere in einem Bereich von etwa 60% bis 100% dem Bediener noch mehr Informationen zur aktuellen Amplitude A und somit den aktuellen Anbauzustand an die Hand zu geben, ist erfindungsgemäß eine weitere Steuereinrichtung 42 vorgesehen. Diese Steuereinrichtung 42 ist dazu ausgelegt, die beiden Lichtquellen 51, 52 der Anzeigeeinheit 5 zumindest bei Amplituden A, die im Bereich der Sollamplitude liegen (60% bis 100% der Sollamplitude) derart anzusteuern, um das Leuchten der Lichtquellen 51, 52 in Abhängigkeit der Amplitude A zu unterbrechen, wobei die Anzahl der jeweils in gleichen Zeitabständen t aufeinanderfolgenden Unterbrechungen ein Maß für die Amplitude A der Abtastsignale S1, S2 ist.

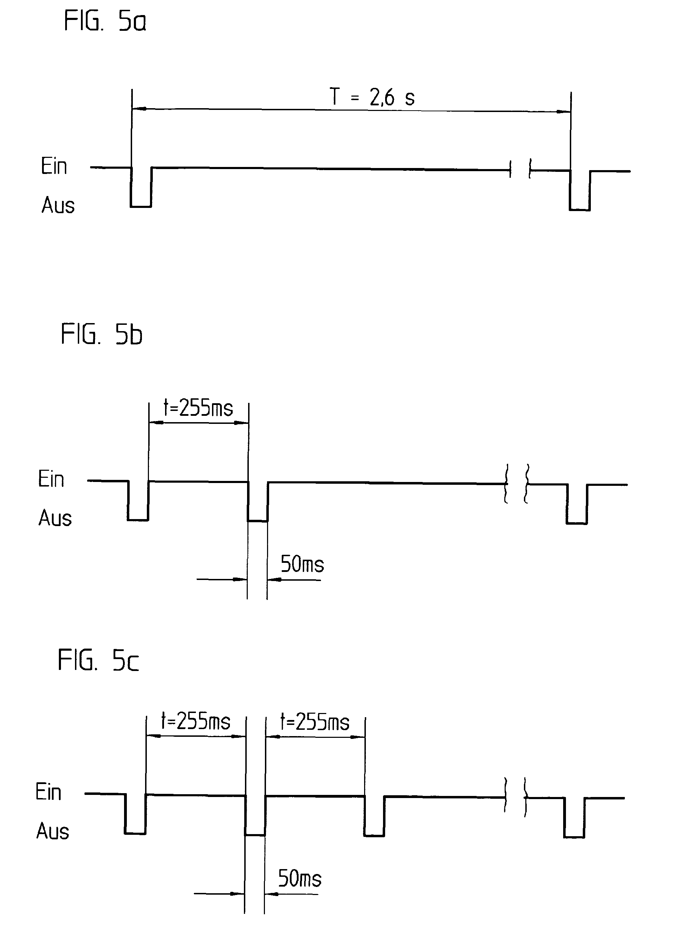

In Figur 4 ist die Anzahl der Unterbrechungen in Abhängigkeit der Amplitude als Blinken bezeichnet. Die Figuren 5a, 5b und 5c zeigen in einem Zeitdiagramm, wie die beiden Lichtquellen 51, 52 angesteuert werden. Die Anzahl der in gleichen Abständen t aufeinanderfolgenden Unterbrechungen ist ein Maß für die momentane Amplitude. Liegt die Amplitude A in einem Bereich von 0,95 bis 1,05 V, werden die Lichtquellen 51, 52 innerhalb eines Zyklusses T einmal unterbrochen, wie in Figur 5a dargestellt ist. Liegt die Amplitude A in einem Bereich von 0,85 bis 0,95 V, werden die beiden Lichtquellen 51, 52 zweimal unterbrochen, wie in Figur 5b dargestellt ist. Liegt die Amplitude A in einem Bereich von 0,75 bis 0,85 V, werden die beiden Lichtquellen 51, 52 dreimal unterbrochen, wie in Figur 5c dargestellt ist. Die Unterbrechungen erfolgen bei allen Amplituden A in aufeinanderfolgend gleichen Abständen t, im Beispiel ist t=255ms, wobei die Zeit jeweils einer Unterbrechung 50ms beträgt. Die Zeit einer Unterbrechung (im Beispiel 50ms) ist viel kleiner als die darauf folgende Zeit t des Leuchtens bis zur nächsten Unterbrechung (im Beispiel 255ms) Der Zyklus der Unterbrechungen wiederholt sich in einem festen Zeitraster T, hier im Beispiel 2,6s. Besonders anzumerken ist, dass nicht die Frequenz der Unterbrechungen als Maß für die Amplitude A verwendet wird, sondern nur die Anzahl der Unterbrechungen, wobei die Frequenz der aufeinanderfolgenden Unterbrechungen innerhalb eines Zyklusses T bei allen Amplituden A gleich ist. Der Bediener erhält somit eine verbesserte Information über den tatsächlichen Zustand der Amplitude A durch einfaches Abzählen der innerhalb eines Zyklusses auftretenden aufeinanderfolgenden Unterbrechungen der Lichtquellen 51, 52. Die Anzahl der Unterbrechungen, also der aufeinanderfolgenden Ausschaltzustände der Lichtquelle 51, 52 ändert sich zumindest im Bereich 60% bis 100% der Sollamplitude kontinuierlich.

Das dargestellte Ausführungsbeispiel ist besonders vorteilhaft, indem die beiden Lichtquellen 51, 52 in gleicher Weise von der Steuereinrichtung 42 angesteuert unterbrochen werden. Da für den Bediener die Amplituden A in der Nähe der Sollamplitude - hier 1 V - besonders von Interesse ist, also im Bereich von etwa 60% bis 100% der Sollamplitude, könnte alternativ nur die grün leuchtende Lichtquelle 51 von der Steuereinrichtung 42 angesteuert werden und deren Leuchten abhängig von der Amplitude A unterbrochen werden. Eine weitere Alternative wäre, dass eine Lichtquelle nur von der Steuereinrichtung 41 und eine weitere Lichtquelle nur von der Steuereinrichtung 42 angesteuert wird.

Die Lichtquellen 51, 52 sind vorzugsweise Leuchtdioden, die platzsparend und trotzdem für den Bediener gut sichtbar an der Abtasteinheit 2 angebracht werden können. Bevorzugt sind die beiden Leuchtdioden 51, 52 in einem gemeinsamen Gehäuse untergebracht. Eine derartige LED wird auch Duo-LED bezeichnet. Soll zusätzlich die Lage einer auf dem Maßstab 1 angeordneten Referenzmarke überprüft werden, kann in diesem Gehäuse auch noch eine andersfarbige Leuchtdiode, insbesondere eine blaue, integriert sein. Eine derartige dreifarbige Leuchtdiode wird auch RGB-LED genannt.

Die Erfindung ist bei Längen- sowie Winkelmesseinrichtungen einsetzbar. Die Abtastelemente zur Erzeugung der Abtastsignale können dabei lichtelektrische Elemente, magnetfeldempfindliche, kapazitive sowie induktive Elemente sein.

**Patentansprüche**

1. Abtasteinheit einer Positionsmesseinrichtung zur Abtastung eines Maßstabs (1), mit einer Kontrollvorrichtung (4) zur Kontrolle der Amplitude (A) zumindest eines analogen Abtastsignals (S1, S2) der Abtasteinheit (2) und mit einer Anzeigeeinheit (5) zur Signalisierung der Amplitude (A), **dadurch gekennzeichnet, dass** die Kontrollvorrichtung (4) dazu ausgelegt ist, zumindest eine Lichtquelle (51, 52) der Anzeigeeinheit (5) derart anzusteuern, um einen Wechsel des Leuchtzustandes der Lichtquelle (51, 52) zu bewirken, wobei der Wechsel des Leuchtzustandes eine Unterbrechung des Leuchtens der Lichtquelle (51, 52) der Anzeigeeinheit (5) ist, wobei die Anzahl der jeweils in gleichen Zeitabständen (t) aufeinanderfolgenden Unterbrechungen ein Maß für die Amplitude (A) des Abtastsignals (S1, S2) ist.

**2.** Abtasteinheit nach Anspruch 1, **dadurch gekennzeichnet, dass** die Kontrollvorrichtung (4) dazu ausgelegt ist, die Lichtquelle (51, 52) in einem Bereich von 60% bis 100% der Sollamplitude in zumindest vier voneinander unterscheidbare Zustände zu versetzten, wobei diese Zustände sich in der Anzahl der Wechsel des Leuchtzustandes unterscheiden.

**3.** Abtasteinheit nach einem der vorhergehenden Ansprüche, **dadurch gekennzeichnet, dass** die Kontrollvorrichtung (4) eine erste Steuereinrichtung (42) aufweist, die dazu ausgelegt ist, die Lichtquelle (51, 52) der Anzeigeeinheit (5) derart anzusteuern, um das Leuchten der Lichtquelle (51, 52) in Abhängigkeit der Amplitude (A) zu unterbrechen, wobei die Anzahl der jeweils in gleichen Zeitabständen (t) aufeinanderfolgenden Unterbrechungen ein Maß für die Amplitude (A) des Abtastsignals (S1, S2) ist, und dass die Kontrollvorrichtung (4) eine zweite Steuereinrichtung (41) aufweist, welche dazu ausgelegt ist die Leuchtstärke dieser Lichtquelle (51, 52) oder einer anderen Lichtquelle der Anzeigeeinheit (5) in Abhängigkeit der Amplitude (A) des Abtastsignals (S1, S2) zu verändern.

**4.** Abtasteinheit nach Anspruch 3, **dadurch gekennzeichnet, dass** die Anzeigeeinheit (5) zwei Lichtquellen (51, 52) umfasst, wobei jeweils beide Lichtquellen (51, 52) von der ersten Steuereinrichtung (41) sowie von der zweiten Steuereinrichtung (42) angesteuert sind, und die zweite Steuereinrichtung (41) die Leuchtstärke beider Lichtquellen (51, 52) invers zueinander verändert.

**5.** Abtasteinheit nach Anspruch 4, **dadurch gekennzeichnet, dass** eine der Lichtquellen (51) grün leuchtend und die andere der Lichtquellen (52) rot leuchtend ist.

**6.** Positionsmesseinrichtung mit einem Maßstab (1) und einer diesen abtastenden Abtasteinheit (2) gemäß einem der vorhergehenden Ansprüche.

**Claims**

**1.** Scanning unit of a position measuring device for scanning a scale (1), having a control device (4) for controlling the amplitude (A) at least of an analogue scanning signal (S1, S2) of the scanning unit (2), and having a display unit (5) for signalling the amplitude (A), **characterized in that** the control device (4) is designed to drive at least one light source (51, 52) of the display unit (5) in such a way as to change the luminous state of the light source (51, 52), the change in the luminous state being an interruption in the illumination of the light source (51, 52) of the display unit (5), the number of the interruptions respectively succeeding one another at equal time intervals (t) being a measure of the amplitude (A) of the scanning signal (S1, S2).

**2.** Scanning unit according to Claim 1, **characterized in that** the control device (4) is designed to shift the light source (51, 52) in a range from 60% to 100% of the desired amplitude into at least four states distinguishable from one another, said states differing in the number of the changes in the luminous state.

**3.** Scanning unit according to one of the preceding claims, **characterized in that** the control device (4) has a first controller (42) which is designed to drive the light source (51, 52) of the display unit (5) in such a way as to interrupt the illumination of the light source (51, 52) as a function of the amplitude (A), the number of the interruptions respectively succeeding one another at equal time intervals (t) being a measure of the amplitude (A) of the scanning signal (S1, S2), and **in that** the control device (4) has a second controller (41) which is designed to vary the luminous intensity of said light source (51, 52) or another light source of the display unit (5) as a function of the amplitude (A) of the scanning signal (S1, S2).

**4.** Scanning unit according to Claim 3, **characterized in that** the display unit (5) comprises two light sources (51, 52), respectively being driven by the first controller (41) and by the second controller (42), and the second controller (41) varying the luminous intensity of the two light sources (51, 52) inversely to one another.

**5.** Scanning unit according to Claim 4, **characterized in that** one of the light sources (51) is emitting in green, and the other of the light sources (52) is emitting in red.

**6.** Position measuring device having a scale (1) and a scanning unit (2) according to one of the preceding claims which scans the latter.

**Revendications**

**1.** Unité de balayage d'un dispositif de mesure de position destinée à balayer un étalon de mesure (1), comportant un moyen de commande (4) destiné à commander l'amplitude (A) d'au moins un signal de balayage analogique (S1, S2) de l'unité de balayage (2) et comportant une unité d'affichage (5) destinée à signaler l'amplitude (A),
**caractérisée en ce que**
le moyen de commande (4) est conçu pour commander au moins une source de lumière (51, 52) de l'unité d'affichage (5) de manière à provoquer un changement d'état d'éclairage de la source de lumière (51, 52), dans lequel

le changement d'état d'éclairage est une interruption de l'éclairage de la source de lumière (51, 52) de l'unité d'affichage (5), dans lequel le nombre des interruptions consécutives au cours d'intervalles de temps identiques respectifs (t) est une mesure de l'amplitude (A) du signal de balayage (S1, S2).

2. Unité de balayage selon la revendication 1, **caractérisée en ce que** le moyen de commande (4) est conçu pour faire passer la source de lumière (51, 52), dans une région allant de 60 % à 100 % de l'amplitude nominale, dans au moins quatre états différents les uns des autres, dans lequel lesdits états se différencient par le nombre des changements d'état d'éclairage.

3. Unité de balayage selon l'une quelconque des revendications précédentes, **caractérisée en ce que** le moyen de commande (4) comprend un premier dispositif de commande (42) qui est conçu pour commander la source de lumière (51, 52) de l'unité d'affichage (5) de manière à interrompre l'éclairage de la source de lumière (51, 52) en fonction de l'amplitude (A), dans lequel le nombre des interruptions consécutives au cours d'intervalles de temps identiques respectifs (t) est une mesure de l'amplitude (A) du signal de balayage (S1, S2) et **en ce que** le moyen de commande (4) comprend un second dispositif de commande (41) qui est conçu pour modifier l'intensité lumineuse desdites sources de lumière (51, 52) ou d'une autre source de lumière de l'unité d'affichage (5) en fonction de l'amplitude (A) du signal de balayage (S1, S2).

4. Unité de balayage selon la revendication 3, **caractérisée en ce que** l'unité d'affichage (5) comprend deux sources de lumière (51, 52), dans lequel les deux sources de lumière (51, 52) sont respectivement commandées par le premier dispositif de commande (41) et par le second dispositif de commande (42) et le second dispositif de commande (41) modifie l'intensité lumineuse des deux sources de lumière (51, 52) de manière inverse l'un de l'autre.

5. Unité de balayage selon la revendication 4, **caractérisée en ce que** l'une des sources de lumière (51) produit un éclairage vert et **en ce que** l'autre des sources de lumière (52) produit un éclairage rouge.

6. Dispositif de mesure de position comportant un étalon de mesure (1) et une unité de balayage (2) balayant celui-ci selon l'une quelconque des revendications précédentes.

FIG. 1

FIG. 2

FIG. 3

FIG. 4

| Amplitude | Blinken | Leuchtstärke | |
|---|---|---|---|
| | | grün [%] | rot [%] |
| 1,35V-1,45V | 5x | 42,9 | 57,1 |
| 1,25V-1,35V | 4x | 57,1 | 42,9 |
| 1,15V-1,25V | 3x | 71,4 | 28,6 |
| 1,05V-1,15V | 2x | 85,7 | 14,3 |
| 0,95V-1,05V | 1x | 100 | 0 |
| 0,85V-0,95V | 2x | 85,7 | 14,3 |
| 0,75V-0,85V | 3x | 71,4 | 28,6 |
| 0,65V-0,75V | 4x | 57,1 | 42,9 |
| 0,55V-0,65V | 5x | 42,9 | 57,1 |
| 0,45V-0,55V | 6x | 28,6 | 71,4 |
| 0,35V-0,45V | 7x | 14,3 | 85,7 |
| 0,25V-0,35V | 8x | 0 | 100 |
| 0,15V-0,25V | 8x | 0 | 100 |
| 0,00V-0,15V | 8x | 0 | 100 |

FIG. 5a

T = 2,6 s

Ein

Aus

FIG. 5b

t=255ms

Ein

Aus

50ms

FIG. 5c

t=255ms    t=255ms

Ein

Aus

50ms

**IN DER BESCHREIBUNG AUFGEFÜHRTE DOKUMENTE**

**In der Beschreibung aufgeführte Patentdokumente**

- EP 0514081 B1
- DE 10157112 A1
- DE 4428673 A1